(19) Europäisches Patentamt
European Patent Office
Office européen des brevets

(11) **EP 4 730 784 A1**

(12) **EUROPEAN PATENT APPLICATION**

(43) Date of publication:
**22.04.2026 Bulletin 2026/17**

(21) Application number: **24306736.0**

(22) Date of filing: **17.10.2024**

(51) International Patent Classification (IPC):
*H04N 19/117* (2014.01)   *H04N 19/82* (2014.01)
*H04N 19/11* (2014.01)   *H04N 19/159* (2014.01)
*H04N 19/176* (2014.01)   *H04N 19/593* (2014.01)
*H04N 19/70* (2014.01)

(52) Cooperative Patent Classification (CPC):
**H04N 19/11; H04N 19/117; H04N 19/159;
H04N 19/176; H04N 19/593; H04N 19/70;
H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **MARZUKI, Ismail
MONTREAL, H3J 1V4 (CA)**
• **PURI, Saurabh
SAINT-LAZARE, J7T 0P6 (CA)**
• **LEFEBVRE, Frederic
35000 RENNES (FR)**
• **BOISSON, Guillaume
35137 PLEUMELEUC (FR)**

(74) Representative: **Vossius & Partner
Patentanwälte Rechtsanwälte mbB
Siebertstraße 3
81675 München (DE)**

(54) **BILATERAL FILTER ON INTRA PREDICTION**

(57)    Systems, methods, and instrumentalities are disclosed for bilateral filtering on intra prediction. In examples, a device (e.g., a video encoding and/or decoding device) may be configured to determine that a decoder side intra mode derivation (DIMD) mode is used to decode a block. The device may, based on the determination that the DIMD mode is used to decode the block, obtain DIMD histogram of gradients (HoG) information. The device may, based at least on the DIMD HoG information, determine whether to enable intra bilateral filtering (BIF) on the block. The device may, based on a determination to enable the intra BIF, apply the intra BIF to process (e.g., encode and/or decode) the block.

FIG. 14

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for bilateral filtering on intra prediction. In examples, a device (e.g., a video encoding and/or decoding device) may be configured to determine that a decoder side intra mode derivation (DIMD) mode is used to decode a block. The device may, based on the determination that the DIMD mode is used to decode the block, obtain DIMD histogram of gradients (HoG) information. The device may, based at least on the DIMD HoG information, determine whether to enable intra bilateral filtering (BIF) on the block. The device may, based on a determination to enable the intra BIF, apply the intra BIF to process (e.g., encode and/or decode) the block.

The device may determine a HOG value from the DIMD HoG information. The device may determine whether the HoG value is above a threshold value. The device may, based on a determination that the HoG value is above the threshold value, enable the intra BIF. The HOG value may be associated with a highest peak HoG value. The device may, based on the determination that the DIMD mode is not used to decode the block, obtain a HoG value for the block, and the block may be associated with a current block. The device may determine whether the HoG value is above a threshold value. The device may, based on a determination that the HoG value is above the threshold value, enable the intra BIF.

The device may obtain a filter enabled indication. The filter enabled indication may be configured to indicate whether a sample associated with at least one of an intra block copy (IBC) mode or an intra template matching (intra TMP) mode has been filtered. The device may, based on the obtained filter enabled indication, determine that the sample associated with at least the IBC mode or the intra TMP mode has not been filtered. The device may, based on the determination, enable the intra BIF.

The device may determine that a sample that is associated with at least one of an intra block copy (IBC) mode or an intra template matching (intra TMP) mode has been filtered. The device may, based on the determination that the sample associated with at least the IBC mode or the intra TMP mode has not been filtered, enable the intra BIF. The device may include a filter enabled indication in video data, and the filter enabled indication may be configured to indicate whether the sample associated with at least one of the IBC mode or the intra TMP mode has been enabled.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG.3 shows an example video decoder according to one or more embodiments of the present disclosure.

FIG. 4 shows an example of an 8x8 TU block and a filter aperture for a sample located at (1,1).

FIG. 5 shows an example coefficient look-up-table that may be used to obtain weights of a filter.

FIG. 6 shows example neighboring samples that may be utilized in a bilateral filter.

FIG. 7 shows an example of windows covering two samples utilized in weight calculation.

FIG. 8 shows examples of samples that may be used in the weighted sum.

FIG. 9 shows an example filter (e.g., a bilateral filter (BIF)) (e.g., sample adaptive offset (SAO) may use samples from the deblocking stage as input).

FIG. 10 shows an example naming convention for samples surrounding a center sample, $I_C$.

FIG. 11 shows an example filtering stage of BIF-chroma.

FIG. 12 shows an example of in-loop filtering.

FIG. 13 shows an example of applying or skipping intra BIF.

FIG. 14 shows an example of applying or skipping intra BIF.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

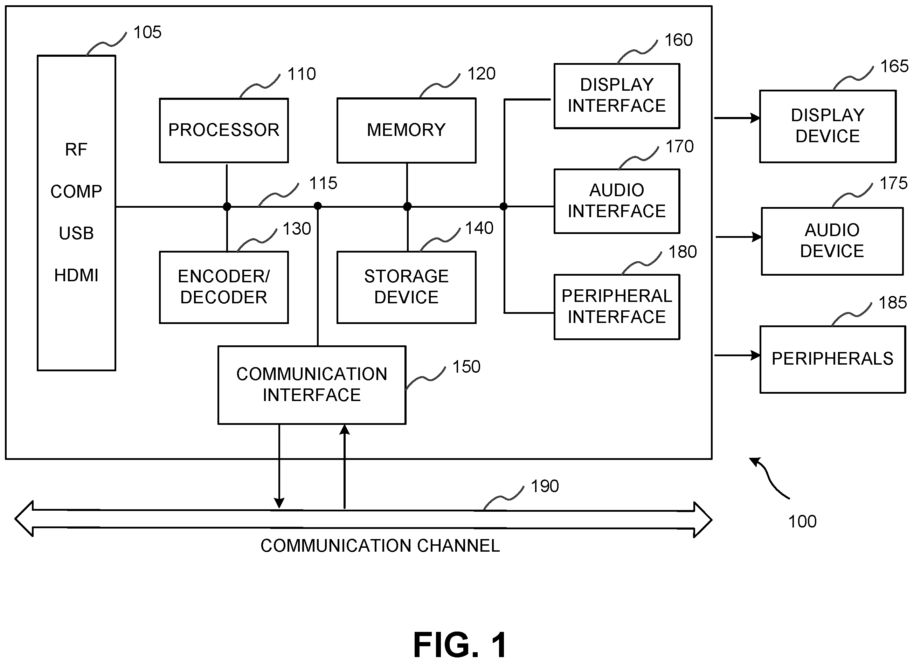

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g., cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

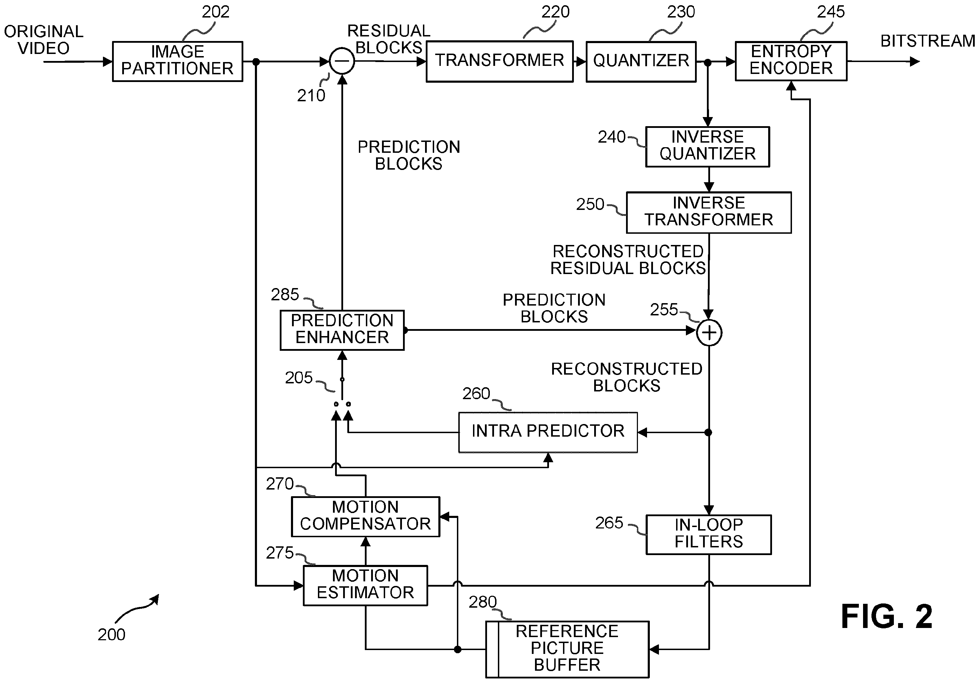

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

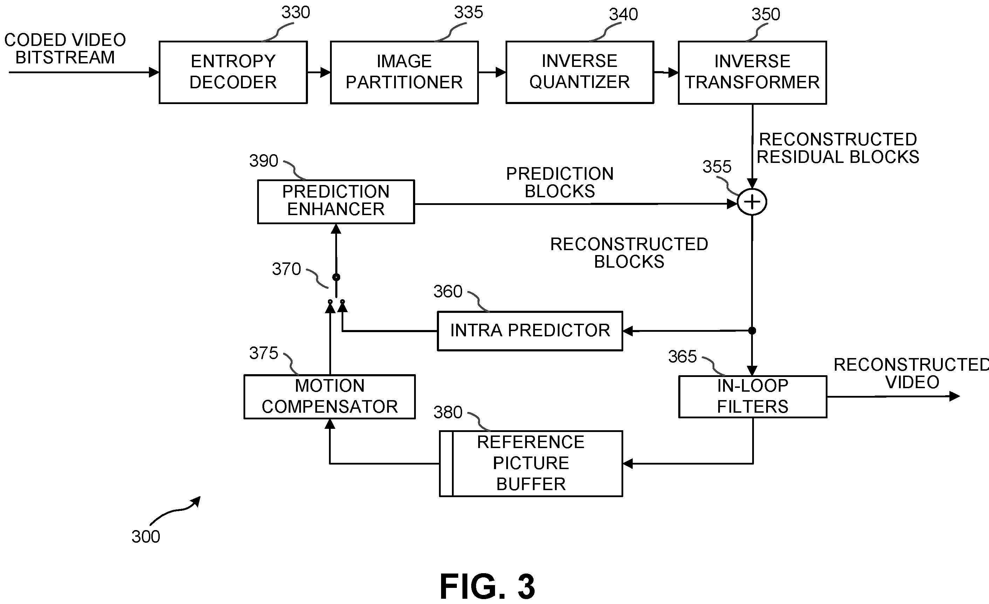

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by

EP 4 730 784 A1

an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for bilateral filtering on intra prediction. In examples, a device (e.g., a video encoding and/or decoding device) may be configured to determine that a decoder side intra mode derivation (DIMD) mode is used to decode a block. The device may, based on the determination that the DIMD mode is used to decode the block, obtain DIMD histogram of gradients (HoG) information. The device may, based at least on the DIMD HoG information, determine whether to enable intra bilateral filtering (BIF) on the block. The device may, based on a determination to enable the intra BIF, apply the intra BIF to process (e.g., encode and/or decode) the block.

The device may determine a HOG value from the DIMD HoG information. The device may determine whether the HoG value is above a threshold value. The device may, based on a determination that the HoG value is above the threshold value, enable the intra BIF. The HOG value may be associated with a highest peak HoG value. The device may, based on the determination that the DIMD mode is not used to decode the block, obtain a HoG value for the block, and the block may be associated with a current block. The device may determine whether the HoG value is above a threshold value. The device may, based on a determination that the HoG value is above the threshold value, enable the intra BIF.

The device may obtain a filter enabled indication, and the filter enabled indication may be configured to indicate whether a sample associated with at least one of an intra block copy (IBC) mode or an intra template matching (intra TMP) mode has been filtered. The device may, based on the obtained filter enabled indication, determine that the sample associated with at least the IBC mode or the intra TMP mode has not been filtered. The device may, based on the determination, enable the intra BIF.

The device may determine that a sample that is associated with at least one of an intra block copy (IBC) mode or an intra template matching (intra TMP) mode has been filtered. The device may, based on the determination that the sample associated with at least the IBC mode or the intra TMP mode has not been filtered, enable the intra BIF. The device may include a filter enabled indication in video data, and the filter enabled indication may be configured to indicate whether the sample associated with at least one of the IBC mode or the intra TMP mode has been enabled.

A computer-readable medium may include a medium including instructions for causing one or more processors to perform the method of examples described herein.

A computer program product which is stored on a non-transitory computer readable medium may include program code instructions for implementing the steps of a method according to examples described herein when executed by a processor.

Video data may include information representative of the block (e.g., the coding block) encoded according to one examples described herein.

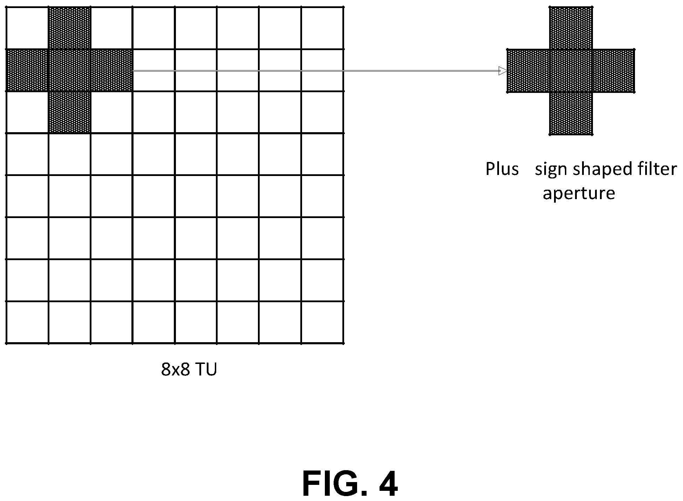

A bilateral filter may be derived from gaussian filters and may be described as follows: a (e.g., each) sample in the reconstructed picture may be replaced by a weighted average of itself and its neighbors. The weights may be calculated based on the distance from the center sample and the difference in sample values. Because the filter is in the shape of a small plus sign as shown in FIG. 4, the distances (e.g., all of the distances) may be 0 or 1.

FIG. 4 illustrates an example of an 8x8 TU block and the filter aperture for the sample located at (1,1). A sample located at (i, j) may be filtered using its neighboring sample (k, l). The weight $\omega(i, j, k, l)$ is the weight assigned for sample (k, l) to filter the sample (i, j), and it may be defined as:

$$\omega(i, j, k, l) = e^{\left(-\frac{(i-k)^2 + (j-l)^2}{2\sigma_d^2} - \frac{\|I(i,j) - I(k,l)\|^2}{2\sigma_r^2}\right)} \qquad (Eq.\,1)$$

I(i, j) and I(k, l) may be the original reconstructed intensity value of samples (i, j) and (k,l) respectively. $\sigma_d$ is the spatial parameter, and $\sigma_r$ is the range parameter. The property (or strength) of the bilateral filter may be controlled by these two parameters. Samples located closer to the sample to be filtered, and samples having smaller intensity difference to the sample to be filtered, may have larger weight than samples further away and with larger intensity difference. $\sigma_d$ is based on the transform unit size (Eq. 2), and $\sigma_r$ is based on the QP used for the current block (Eq. 3).

$$\sigma_d = 0.92 - \frac{\min(\text{TU block width, TU block height})}{40} \qquad (Eq.\,2)$$

$$\sigma_r = \max\left(\frac{(QP - 17)}{2}, 0.01\right) \qquad (Eq.\,3)$$

The bilateral filter may apply to a (e.g., each) TU block directly after the inverse transform in both the encoder and the decoder. Subsequent intra-coded blocks may predict from the sample values that have been filtered with the bilateral filter. The bilateral filter operation may be included in the rate-distortion decisions in the encoder and this may be how the filter has been implemented (e.g., in JEM).

A sample in the transform unit may be filtered using its direct neighboring samples (e.g., only its direct neighboring samples). The filter may have a plus sign shaped filter aperture centered at the sample to be filtered.

The output filtered sample value $I_D\,(i, j)$ may be calculated as:

$$I_D(i, j) = \frac{\sum_{k,l} I(k, l) * \omega(i, j, k, l)}{\sum_{k,l} \omega(i, j, k, l)} \qquad (Eq.\,4)$$

For TU sizes larger than $16 \times 16$, the block may be treated as (e.g., several) $16 \times 16$ blocks using TU block width = TU block height = 16 in Equation 2. Rectangular blocks may be treated as (e.g., several) instances of square blocks. In order to reduce the number of calculations, the proposed bilateral filter may be implemented using a look-up-table (LUT) storing (e.g., all) weights for a particular QP in a two-dimensional array. The LUT may use the intensity difference between the sample to be filtered and the reference sample as the index of the LUT in one dimension, and the TU size as the index in another dimension. For (e.g., efficient) storage of the LUT, weights may be rounded to 8-bit precision.

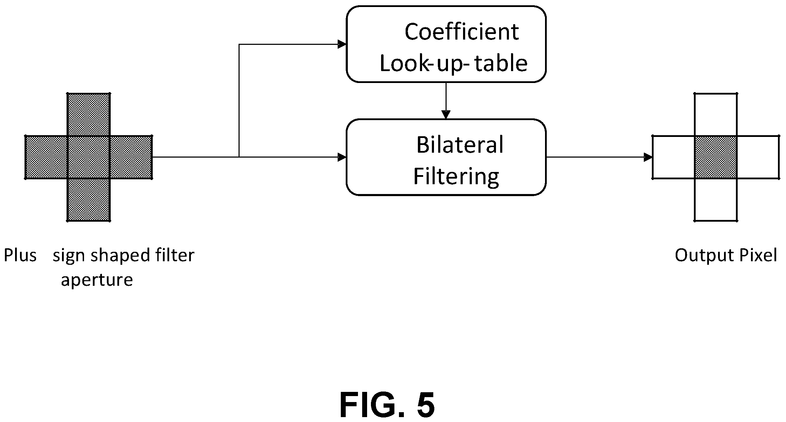

FIG. 5 illustrates a coefficient look-up-table that may be used to obtain the weights of the filter. The proposed bilateral filter may be a five-tap filter in the shape of a plus sign. The strength of the filter may be based on the TU size and QP.

The filter strength may be lower for blocks using inter prediction. Inter predicted blocks may have less residual than intra predicted blocks. The reconstruction of inter predicted blocks may be filtered less. The filter strength for intra predicted blocks may be set as described herein, and for inter predicted blocks the following spatial weight may be used:

$$\sigma_d \ = \ 0.72 - \frac{\min(\text{TU block width, TU block height})}{40} \qquad (Eq.\,5)$$

The size of the lookup table (LUT) for the bilateral filter may be is reduced. The goal of the LUT may be to pre-calculate the weights of the bilateral filter:

$$\omega(i,j,k,l) = e^{\left(-\frac{(i-k)^2+(j-l)^2}{2\sigma_d^2}-\frac{\|I(i,j)-I(k,l)\|^2}{2\sigma_r^2}\right)}, \qquad (Eq.\,6)$$

so that the filtered pixel $I_F(i, j)$ can be calculated as

$$I_F(i,j) = \frac{\sum_{k,l} I(k,l) * \omega(i,j,k,l)}{\sum_{k,l} \omega(i,j,k,l)}. \qquad (Eq.\,7)$$

for the center weight, e.g., the weight for the center pixel, $k = i$ and $j = l$. Hence $(i - k) = (j - l) = 0$ and $I(i, j) = I(k, l)$ and the center weight $\omega(i, j, i,j)$ may be 1.0.

For (e.g., all) other weights, $(i - k)^2 + (j - l)^2 = 1$ since the 4-neighbors of a pixel are included in the filtering (a "plus-shaped" filter kernel). Therefore

$$\begin{cases} \omega_{center} = 1.0 \\ \omega_{other} = e^{\left(-\frac{1}{2\sigma_d^2}-\frac{\|I-I_c\|^2}{2\sigma_r^2}\right)} \end{cases}$$

where $I_c$ is the intensity of the center pixel. Since the center weight is 1.0, a LUT may or may not be used (e.g., may not be needed) for it.

For the other weights, a 3D LUT may be indexed over the following dimensions. Modes: the variable $\sigma_d$ may take 6 different values depending upon the TU size and type of block; 3 (e.g., 3 each) for intra blocks ($4\times4$, $8\times8$, and $16\times16$ blocks) and 3 (e.g., 3 each) for inter blocks ($4\times4$, $8\times8$, and $16\times16$ blocks). Rectangular blocks may use the smaller dimension. QPs: the variable $\sigma_r$ is calculated from the QP value and the filter may be turned on for QP 18 and higher: For QP 17 and lower $\sigma_r$ may becomes too small to change the filtered value. Therefore, this dimension may take 34 different values (18 through 51). Absolute intensity difference: The value $\|I - I_c\|$ may take 1024 different values for 10-bit luma values.

A weight may be stored using an unsigned short. In an example, a brute force implementation may use 6*34*1024*2 = 417 792 bytes of LUT memory.

The division may be removed and replaced with a multiplication and a lookup-table (LUT). To keep the size of the LUT as small as possible, from Eq.7 the nominator and the denominator of the division may be as small as possible. To reduce the nominator, the filtering equation may be rewritten using differences. To reduce the denominator, the large center weight value for inter blocks of size $16\times16$ and larger may be avoided by turning the filter off for these blocks. Since the filter (shape 2x2) touches the center pixel and its 4-neighbors, this equation (Eq.7) may be written as

$$I_F = \frac{I_C\omega_C + I_L\omega_L + I_R\omega_R + I_A\omega_A + I_B\omega_B}{\omega_C + \omega_L + \omega_R + \omega_A + \omega_B}, \qquad (Eq.\,8)$$

where $I_C$ is the intensity of the center pixel, and $I_L$, $I_R$, $I_A$ and $I_B$ are the intensities for the left, right, above and below pixel

respectively. $\omega_C$ is the weight for the center pixel, and $\omega_L$, $\omega_R$, $\omega_A$ and $\omega_B$ are the corresponding weights for the neighboring pixels.

The nominator may become relatively big. Equation 8 may be rewritten as

$$I_F = I_C + \frac{\omega_L \Delta I_L + \omega_R \Delta I_R + \omega_A \Delta I_A + \omega_B \Delta I_B}{\omega_C + \omega_L + \omega_R + \omega_A + \omega_B}, \qquad (Eq.\,9)$$

where $\Delta I_L = I_L - I_C$ and $\Delta I_R = I_B - I_C$, etc.

When an (e.g., large) difference in intensity $\Delta I$ occurs, the bilateral filter may choose a (e.g., small) weight $\omega$. The product $\Delta I * \omega$ may be small, since $\Delta I$ may be small or $\omega$ may be small.

The denominator in Equation 9 may be equal to $\omega_C + \omega_L + \omega_R + \omega_A + \omega_B$. The maximum value for the non-center weights $\omega_L$, $\omega_R$, $\omega_A$ and $\omega_B$ may be 31. The center weight may take the following values, as shown in Table 1.

Table 1: Center weight values based on the prediction mode and the TB length (e.g., JEM).

| | min(TUwidth, TUheight) | | |
|---|---|---|---|
| | 4 | 8 | 16 |
| intra | 65 | 81 | 196 |
| inter | 113 | 196 | 4079 |

A simplification may apply for the bilateral filter. For a (e.g., each) block, the inverse quantized transform coefficients may be examined, and if they contain one (e.g., only one) non-zero coefficient that is at the DC position, bilateral filtering may be skipped for the associated reconstructed block.

A filtering process may be described herein. Once a bilateral filter is applied to luma blocks with non-zero transform coefficients and slice quantization parameter larger than 17, the usage of the bilateral filter may or may not be signaled (e.g., may not need to be signaled). The bilateral filter, if applied, may be performed on decoded samples right after the inverse transform. The filter parameters, e.g., weights, may be explicitly derived from the coded information. The filtering process (Eq.7) may be rewritten as:

$$P'_{0,0} = P_{0,0} + \sum_{k=1}^{K} W_k\big(P_{k,0} - P_{0,0}\big) \times \big(P_{k,0} - P_{0,0}\big) \quad (Eq.\,10)$$

where $P_{0,0}$ is the intensity of the current sample and $P'_{0,0}$ is the modified intensity of the current sample, $P_{k,0}$ and $W_k(\cdot)$ are the intensity and weighting parameter for the k-th neighboring sample, respectively.

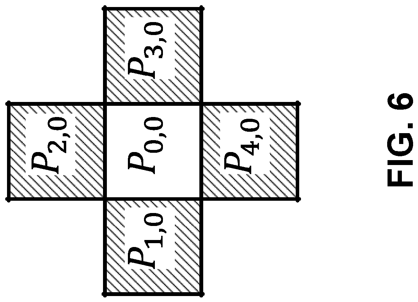

An example of a (e.g., one) current sample and its four neighboring samples (e.g., K=4), in the shape of a plus sign, is depicted in FIG. 6. FIG. 6 illustrates neighboring samples utilized in a bilateral filter.

The weight $W_k(x)$ associated with the k-th neighboring sample may be defined as follows:

$$W_k(x) = Distance_k \times Range_k(x)$$

wherein

$$Distance_k = e^{\left(-\frac{10000}{2\sigma_d^2}\right)} \Big/ 1 + 4 * e^{\left(-\frac{10000}{2\sigma_d^2}\right)},$$

$$Range_k(x) = e^{\left(-\frac{x^2}{8*(QP-17)*(QP-17)}\right)} \qquad (Eq.\,11)$$

and $\sigma_d$ is dependent on the coded mode and coding block sizes.

To modify (e.g., further improve) the coding performance, for inter-coded blocks, the intensity difference between current sample and one of its neighboring samples may be replaced by a representative intensity difference among two windows covering current sample and the neighboring sample. The equation of filtering process may be revised to:

$$P'_{0,0} = P_{0,0} + \sum_{k=1}^{N} W_k \left( \frac{1}{M} \sum_{m=-\frac{M}{2}}^{\frac{M}{2}} abs\left(P_{k,m} - P_{0,m}\right) \right) \times \left(P_{k,0} - P_{0,0}\right) \quad (Eq.\,12)$$

wherein $P_{k,m}$ and $P_{0,m}$ represent the m-th sample value within the windows centered at $P_{k,0}$ and $P_{0,0}$, respectively.

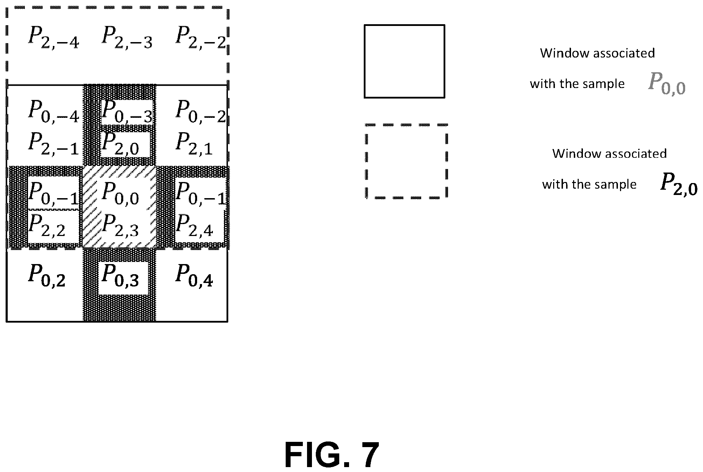

In an example, the window size may be set to 3×3. FIG. 7 illustrates windows covering two samples utilized in weight calculation. Two windows covering $P_{2,0}$ and $P_{0,0}$ are depicted in FIG. 7. A spatial filter strength adjustment based on CU area size for a bilateral filter may be described herein.

The size of the LUT may be reduced to approximate the numerator and denominator in the following equation:

$$I_F = I_C + \frac{w_L \Delta I_L + w_R \Delta I_R + w_A \Delta I_A + w_B \Delta I_B}{w_C + w_L + w_R + w_A + w_B}, \qquad (Eq.\,13)$$

where $I_F$ is the filtered sample, $I_C$ is the intensity of the center sample (the sample to be filtered), $I_L$, $I_R$, $I_A$ and $I_B$ are the intensity of the samples to the left, to the right, above and below respectively.

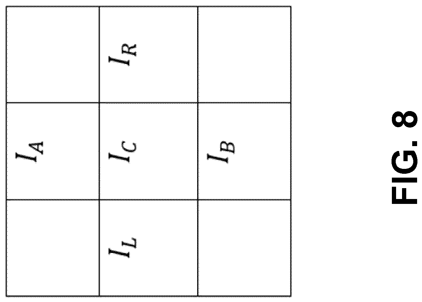

FIG. 8 illustrates samples that may be used in the weighted sum. The delta values are differences against the center sample; $\Delta I_L = I_L - I_C$ and $\Delta I_R = I_R - I_C$, etc. The weights are calculated as

$$w_X = e^{-\frac{1}{2\sigma_d^2} - \frac{|\Delta I_X|^2}{2\sigma_r^2}} \quad (Eq.\,14)$$

where $X$ can be $A, B, L$ or $R$.

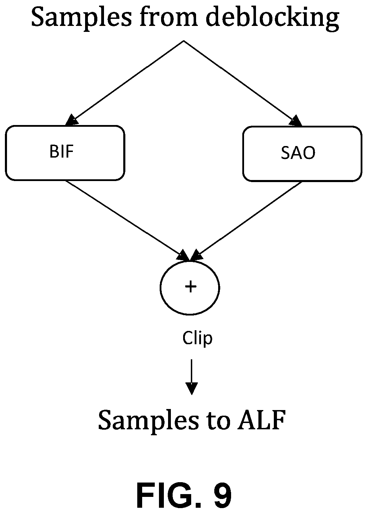

In examples, a bilateral filter may be combined with the sample adaptive offset (SAO) loop filter. The filter may be carried out in the sample adaptive offset (SAO) loop-filter stage, as shown in FIG. 9. The filter (BIF) and SAO may use samples from the deblocking stage as input. The filter (e.g., a bilateral filter) and the SAO may create an offset, and the offsets may be added to the input sample and clipped. Both the proposed bilateral filter (BIF) and SAO may use samples from deblocking as input. A filter may create an offset per sample, and these may be added to the input sample and then clipped.

FIG. 9 illustrates examples wherein the proposed filter (BIF) and SAO use samples from the deblocking stage as input. The offset associated with the bilateral filter and the offset associated with the SAO may be added to the input sample and clipped. Accordingly, the output sample $I_{OUT}$ may be obtained as:

$$I_{OUT} = clip3(I_C + \Delta I_{BIF} + \Delta I_{SAO}) \quad (Eq.\,15)$$

where $I_C$ is the input sample from deblocking, $\Delta I_{BIF}$ is the offset from the bilateral filter and $\Delta I_{SAO}$ is the offset from SAO.

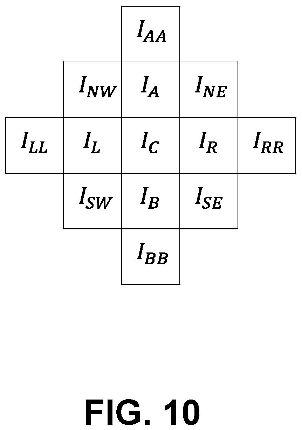

In an example, a diamond 5x5 filter kernel may be used together with 26 tables of 16 entries (e.g., 16 entries each). The filter kernel may operate in the same loop-filter stage as SAO, as depicted in FIG. 10. FIG. 10 illustrates a naming convention for samples surrounding the center sample, $I_C$.

As illustrated in FIG. 10, $I_C$ the center sample and the samples surrounding the center sample are denoted A, B, L and R that stands for above, below, left and right and where NW, NE, SW, SE stands for north-west etc. AA stands for above-above, BB for below-below etc.

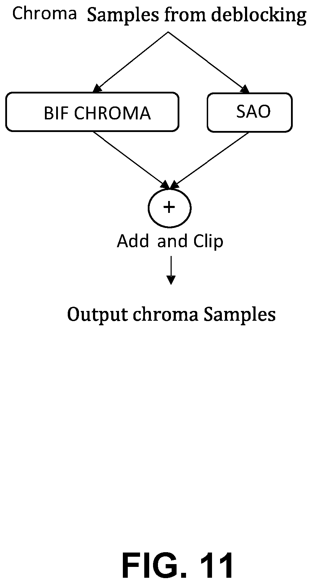

In an example, the BIF-chroma may be performed in parallel with the SAO process as shown in FIG. 11. The BIF-chroma and SAO may use the same chroma samples that are produced by the deblocking filter as input and generate two offsets per chroma sample in parallel. The two offsets may (e.g., may both) be added to the input chroma sample to obtain a sum, which may be clipped to form the final output chroma sample value. The proposed BIF-chroma may provide an on/off control mechanism on the CTU level and slice level. FIG. 11 illustrates an example filtering stage of BIF-chroma.

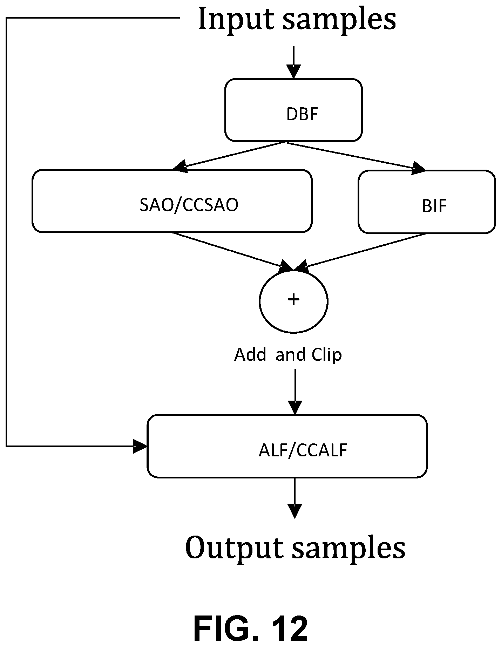

The in-loop filtering flow and BIF's position in the in-loop filtering flow may be presented in FIG. 12. FIG. 12 illustrates an example of in-loop filtering. For an output sample, three offsets may be calculated and clipped:

$$S_{OUT} = clip(S_{IN} + \delta_{SAO} + \delta_{CCSAO} + \delta_{BIF}). \quad (Eq.\,16)$$

The calculation of BIF's offset ($\delta_{BIF}$) may be modified as follows:
The TU scale factor may depend on the TU shape size; the TU scale factor may depend on the mean absolute difference (MAD) of the TU; and/or the BIF LUTs may be interpolated.

The BIF offset may equal a sum of 12 offsets, as depicted in FIG. 10.

$$\delta_{BIF} = \left(C_{TU} \cdot \left[\sum sign(S_{i,j} - S_{0,0}) \cdot F_{BIF,i,j,QP}(|S_{i,j} - S_{0,0}|)\right] + 16\right) \gg 5 \ (\text{eq. } 17),$$

where $F_{\text{BIF},i,j,\text{QP}}$ is based on a 26x16 LUT of 8-bit integers denoted by $\text{LUT}_{\text{base,QP}}$ (for 26 QPs from 17 to 42 and 16 intervals of sample difference).

For the innermost positions, e.g., $\{i, j\}$ = {-1,0}, {1,0}, {0, -1} or {0,1}, a LUT may be used, e.g., $F_{\text{BIF},i,j,\text{QP}}(d) = \text{LUT}_{\text{base,clip(QP,17,42)}}(\min\{ (d + 4) \gg 3, 15 \})$. For the remaining positions, the LUT output may be right shifted:

$$F_{\text{BIF},i,j,\text{QP}}(d) = \text{LUT}_{\text{base,clip(QP,17,42)}}(\min\{ (d + 4) \gg 3, 15 \}) \gg 1. \ (\text{eq. } 18)$$

Let $s_{\text{TU}} = \min(\text{width}_{\text{TU}}, \text{height}_{\text{TU}})$. The base LUT size may be preserved, and the content of the base LUT may be changed and the calculation of $F_{\text{BIF},i,j,\text{QP}}$ may be changed. The proposed method may use three scale factors ($C_{1,0}$, $C_{1,1}$ and $C_{2,0}$) to pre-compute three LUTs for three (e.g., different) neighbor distances (1, $\sqrt{2}$, and 2), for example:

$$\text{LUT}_{i,j,\text{QP}}(k) = \left(C_{i,j} \cdot \text{LUT}_{\text{base,QP}}(k) + 4\right) \gg 3,$$

and the averaging linear interpolation for the half of the values of the cut off least significant bits, for example:

$$F_{\text{BIF},i,j,\text{QP}}(d) = (v_1 + v_2 + 1) \gg 1,$$

where $v_1$ and $v_2$ are successive entries of $\text{LUT}_{i,j,\text{QP}}$.

For chroma, the number of cut off bits may be decreased from 3 to 2. In examples, the number of cut off bits in formula (eq. 17) may be increased from 5 to 8 and $C_{\text{TU}}$ may be defined as follows:

$$C_{\text{TU}} = C_{w,h}^{\text{TU}} + C_{\text{MAD}}^{\text{TU}} \ (\text{eq. } 19)$$

where $C_{w,h}^{\text{TU}}$ is based on the TU's shape sizes and $C_{\text{MAD}}^{\text{TU}}$ is based on the mean absolute difference (MAD) of the TU.

Both $C_{w,h}^{\text{TU}}$ and $C_{\text{MAD}}^{\text{TU}}$ may be calculated using LUTs. $\text{LUT}_{w,h}$ may be a 2D $8 \times 8$ lookup table with non-negative 8-bit integer values, and $\text{LUT}_{\text{MAD}}$ may be a 1D 16-entry lookup table with non-negative 8-bit integer values. The scale factors may be defined as follows:

$$C_{w,h}^{\text{TU}} = \text{LUT}_{w,h}(\log_2 \text{width}_{\text{TU}}, \log_2 \text{height}_{\text{TU}}),$$

$$C_{\text{MAD}}^{\text{TU}} = \text{LUT}_{\text{MAD}}(\min( \text{MAD}_{\text{TU}} \gg 4, 15)).$$

The MAD of a ($h \times w$)-size TU with the channel samples denoted by $s_{i,j}$ may be defined as follows:

$$\text{MAD} = \frac{1}{hw}\sum_{i=1}^{h} \sum_{j=1}^{w} \left| s_{i,j} - \frac{1}{hw}\sum_{i=1}^{h} \sum_{j=1}^{w} s_{i,j} \right| \ (\text{eq. } 20)$$

A dynamic scaling of BIF may include considering the following for the BIF: the TU scale factor depends on the TU shape size; the TU scale factor depends on the mean absolute difference (MAD) of the TU; and/or the BIF LUTs are interpolated.

The base LUT size may be preserved, the content of the base LUT may be changed, and the calculation of $F_{\text{BIF},i,j,\text{QP}}$ may be changed. Three scale factors ($C_{1,0}$, $C_{1,1}$ and $C_{2,0}$) may be used to pre-compute three LUTs for three different neighbor distances (1, $\sqrt{2}$, and 2), e.g.,:

$$\mathrm{LUT}_{i,j,\mathrm{QP}}(k) = \left(C_{i,j} \cdot \mathrm{LUT}_{\mathrm{base},\mathrm{QP}}(k) + 4\right) \gg 3,$$

and the averaging linear interpolation for the half of the values of the cut off least significant bits, e.g.:

$$F_{\mathrm{BIF},i,j,\mathrm{QP}}(d) = (v_1 + v_2 + 1) \gg 1,$$

where $v_1$ and $v_2$ are successive entries of $\mathrm{LUT}_{i,j,\mathrm{QP}}$. For chroma, the number of cut off bits may be decreased from 3 to 2. The number of cut off bits in eq. 17 may be increased from 5 to 8 and

$$C_{\mathrm{TU}} = C_{w,h}^{\mathrm{TU}} + C_{\mathrm{MAD}}^{\mathrm{TU}},$$

where $C_{w,h}^{\mathrm{TU}}$ is based on the TU's shape sizes and $C_{\mathrm{MAD}}^{\mathrm{TU}}$ is based on the mean absolute difference (MAD) of the TU.

$C_{w,h}^{\mathrm{TU}}$ and $C_{\mathrm{MAD}}^{\mathrm{TU}}$ may be calculated using LUTs. $\mathrm{LUT}_{w,h}$ may be a 2D $8 \times 8$ lookup table with non-negative 8-bit integer values, and $\mathrm{LUT}_{\mathrm{MAD}}$ may be a 1D 16-entry lookup table with non-negative 8-bit integer values. The scale factors may be as follows:

$$C_{w,h}^{\mathrm{TU}} = \mathrm{LUT}_{w,h}(\log_2 \mathrm{width}_{\mathrm{TU}}, \log_2 \mathrm{height}_{\mathrm{TU}}),$$

$$C_{\mathrm{MAD}}^{\mathrm{TU}} = \mathrm{LUT}_{\mathrm{MAD}}(\min(\mathrm{MAD}_{\mathrm{TU}} \gg 4, 15)).$$

The MAD of a ($h \times w$)-size TU with the channel samples denoted by $s_{i,j}$ may be as follows:

$$\mathrm{MAD} = \frac{1}{hw}\sum_{i=1}^{h}\sum_{j=1}^{w}\left|s_{i,j} - \frac{1}{hw}\sum_{i=1}^{h}\sum_{j=1}^{w}s_{i,j}\right|$$

Four 64-byte tables $\mathrm{LUT}_{w,h}$ and four 16-byte tables $\mathrm{LUT}_{\mathrm{MAD}}$ may be introduced (e.g., for luma/chroma component, for intra/inter prediction).

$C_{\mathrm{TU}}$ may be a constant for samples of the same channel inside a (e.g., one) TU.

The number of arithmetic operations per sample and the size of memory to store the LUTs in the proposed BIF may be compared against [1-2] in Table 2. The value obtained in the modified version of formula (1) before right bit-shifting may belong to the interval [-15509, 15765], and the arithmetic may be done in 15-bit signed integers.

Table 1: Comparison of the complexity of an example BIF against the ECM 9.0.

| BIF version | Bit width (maximal) | Summations (per sample) | Multiplications (per sample) | LUT lookups (per sample) | LUTs memory (bytes) |
|---|---|---|---|---|---|
| ECM 9.0 | 12 | 18 | 0 | 6 | 832 |
| Example | 15 | 25 | 1 | 12 | 2816 |

Features described herein may be associated with intra BIF. In intra prediction, intra reference samples may be selected from the reconstructed areas. The unfiltered or 1-2-1 filtered intra reference samples may be used to generate the intra prediction. Unfiltered intra reference samples may include the compression noise, and 1-2-1 filtered intra reference samples may over-smooth the sharp edges. The intra prediction samples may be generated from the intra reference samples. The generated intra prediction samples may include the coding noise since the interpolation and weighting are involved in the intra prediction process.

BIF for intra-prediction may be used by considering to filter the intra reference samples before they are used to generate the intra prediction and to filter the generated intra prediction samples before they are used in the next processes to reduce the noise level inside the prediction samples. By applying BIF to the generated intra prediction samples, BIF may be suitable to reduce coding noise inside prediction, since BIF may achieve edge-protection resulting in improving the intra prediction performance. The BIF used for intra prediction may be similar to the BIF used in the loop-filtering stage. BIF may be trained for the loop filtering stage. BIF in loop filtering stage may include look-up-table (LUT) processing. Intra BIF may be enabled for intra planar and angular modes.

When bilateral filter is applied for intra prediction, intra BIF may be associated with the following: intra BIF may use block QP and resolution (width and height) to decide whether to enable BIF on intra prediction or not; intra BIF may be applied to the predicted samples of planar and angular modes.

In examples, it may be determined how to use DIMD HoG information to determine whether to enable or disable intra BIF for the current block. DIMD HoG may provide information of the block characteristics such as presence of a dominant intra direction. Depending on DIMD HoG information, intra BIF may be controlled in favor to the block characteristic for a better coding efficiency. Intra BIF may be further used for other intra coding modes, such as in IBC and Intra TMP.

BIF may be used on intra prediction to remedy coding noise inside prediction samples. Intra BIF may provide edge-protection for objects in a block resulting in improvements for intra prediction performance. Features described herein may be associated with coding efficiency of intra BIF.

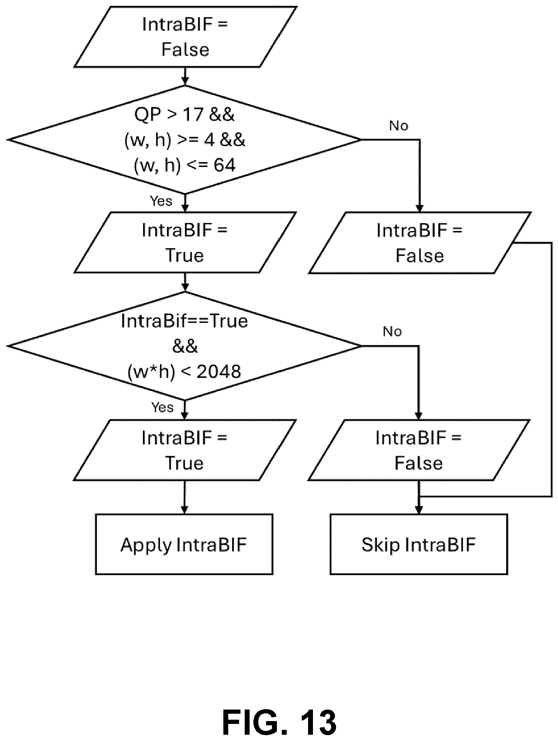

FIG. 13 illustrates an example intra BIF decision. Intra BIF may be based on DIMD HoGs. The decision on whether to apply or skip intra BIF for a block in current implementation of intra BIF may consider a quantization parameter (QP) and a resolution size (width and height) of the block. Intra BIF may be applied to a block that has a QP larger than 17 and block sizes (width and height) equal to minimum 4 and maximum 64. If a multiplication of width and height is larger than 2048, intra BIF may be disabled for a block, as depicted in FIG. 13.

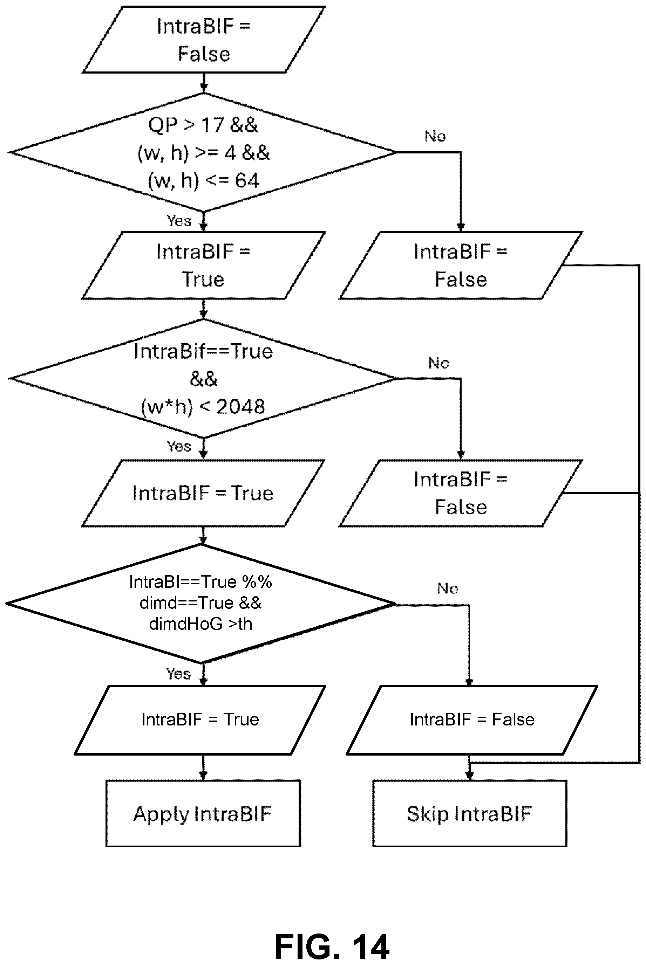

FIG. 14 illustrates an example intra BIF decision. A condition may be applied on top of the existing conditions, or the condition may be applied solely or in combination with other conditions as described herein, as shown in FIG. 14. The condition may check DIMD HoG information to determine whether intra BIF is applied or skipped. HoG values may represent characteristics of a block. For examples, a higher amplitude of HoG may indicate stronger edge information in a block and vice versa.

DIMD may rely on the assumption that the decoded pixels surrounding a current block to be predicted carries information to infer the texture directionality in the block, e.g., the intra prediction modes that most likely generate the predictions with the highest qualities. When DIMD is applied, up to five intra modes may be derived from the reconstructed neighbor samples by analyzing the directionality of the content in the surrounding of the current block instead of analyzing directionality of the current block. The five predictors may be combined with the planar mode predictor with the weights derived from the HoG. The HoG may be computed on a three-sample wide/high L-shaped template formed of already reconstructed samples. The HoG may be obtained using the Sobel filter, accumulating the magnitudes of gradients in a given direction.

If DIMD mode is true for the current block and its HoG, which is computed from its surrounding reconstructed samples, is higher enough, intra BIF may be enabled for the block because it considers that the block has characteristic with strong edges. An average HoG value may be considered from the highest N (e.g., 5) out of total M (e.g., 67) HoG bins to decide whether intra BIF is enabled or not for the current block. If the average HoG value is larger than a given threshold, BIF may be performed for the current block, Otherwise, for example, the current block may be skipped. Such treatment may have an impact on coding performance and encoding/decoding time.

The highest peak of HoGs may be considered to decide whether intra BIF is enabled or not for the current block. If the highest HoG value is larger than a given threshold, BIF may be applied or skipped for the current block.

An HoG value may be calculated for a (e.g., every) block when DIMD mode is disabled. In an example, the HoG value (e.g., instead of being obtained from its surrounding reconstructed samples), may be calculated directly on the current block regardless of whether the DIMD mode for the current block is enabled or not. The intra BIF may be conditionally applied to the current block based on the current embodiment or its variations.

The threshold can be obtained in various ways. For example, the threshold may be set as a static number or based on the resolution size of the block, or an intelligent threshold. Such may be applicable for luma and chroma components.

In examples, intra BIF may be associated with unfiltered samples of IBC/Intra TMP. Intra BIF may be applied to the predicted samples of intra planar and angular modes. intra BIF may be enabled to the predicted samples of Intra Block Copy (IBC) and Intra Template Matching (intra TMP) when they are not filtered.

IBC and Intra TMP may be available for certain contents (e.g., camera-captured contents). IBC and Intra TMP may be associated with a performance when the contents of a copied block are adaptively filtered to the local characteristics of the current block by an adaptive linear filter similar to the Convolutional-Cross-Component Mode (CCCM) filter. The encoder may select the filtered or unfiltered version of the predicted block, which may be signaled to the decoder, for example using a single bit.

In an example, the adaptive linear filter may become the first attempt of filtering for the predicted block of IBC and intra TMP. If the encoder decides to select the unfiltered version of the predicted block, an attempt of filtering may be made by extending the usage of Intra BIF for that particular unfiltered predicted samples of IBC and intra TMP. The encoder may select the filtered or unfiltered version of the predicted block, which may be signaled to the decoder, for example, using a single bit. An indication (e.g., a one-bit indication) may be signaled for the second attempt filtering if the encoder decides to select the unfiltered version after the first attempt filtering.

If the encoder decides to select the unfiltered version of the predicted block of IBC and intra TMP, Intra BIF may be directly applied for that particular unfiltered predicted sample(s) without giving a further option for the encoder to select either the filtered or unfiltered version of the predicted block. The output of the predicted block IBC and intra TMP may be filtered by the existing adaptive linear filter or by Intra BIF. Signaling may be removed from the decoder (e.g., accordingly).

Examples described herein may be applied on top of the usage of Intra BIF to the unfiltered predicted block of IBC and Intra TMP.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. An apparatus for video decoding, the apparatus comprising
   a processor configured to:

   determine that a decoder side intra mode derivation (DIMD) mode is used to decode a block;
   based on the determination that the DIMD mode is used to decode the block, obtain DIMD histogram of gradients (HoG) information;
   based at least on the DIMD HoG information, determine whether to enable intra bilateral filtering (BIF) on the block; and
   based on a determination to enable the intra BIF, apply the intra BIF to decode the block.

2. A method for video decoding, the method comprising:

determining that a decoder side intra mode derivation (DIMD) mode is used to decode a block;

based on the determination that the DIMD mode is used to decode the block, obtaining DIMD histogram of gradients (HoG) information;

based at least on the DIMD HoG information, determining whether to enable intra bilateral filtering (BIF) on the block; and

based on a determination to enable the intra BIF, applying the intra BIF to decode the block.

3. An apparatus for video encoding, the apparatus comprising
a processor configured to:

   determine that a decoder side intra mode derivation (DIMD) mode is used to encode a block;

   based on the determination that the DIMD mode is used to encode the block, obtain DIMD histogram of gradients (HoG) information;

   based at least on the DIMD HoG information, determine whether to enable intra bilateral filtering (BIF) on the block; and

   based on a determination to enable the intra BIF, apply the intra BIF to encode the block.

4. A method for video encoding, the method comprising:

   determining that a decoder side intra mode derivation (DIMD) mode is used to encode a block;

   based on the determination that the DIMD mode is used to encode the block, obtaining DIMD histogram of gradients (HoG) information;

   based at least on the DIMD HoG information, determining whether to enable intra bilateral filtering (BIF) on the block; and

   based on a determination to enable the intra BIF, applying the intra BIF to encode the block.

5. The apparatus of claim 1 or claim 3, wherein to determine whether to enable the intra BIF comprises the processor being configured to:

   determine a HOG value from the DIMD HoG information;

   determine whether the HoG value is above a threshold value; and

   based on a determination that the HoG value is above the threshold value, enable the intra BIF.

6. The method of claim 2 or claim 4, wherein determining whether to enable the intra BIF comprises:

   determining a HOG value from the DIMD HoG information;

   determining whether the HoG value is above a threshold value; and

   based on a determination that the HoG value is above the threshold value, enabling the intra BIF.

7. The apparatus of any one of claim 1, 3, or 5 or the method of any one of claim 2, 4, or 6, wherein the HOG value is associated with a highest peak HoG value.

8. The apparatus of claim 1, where the processor is configured to:

   based on the determination that the DIMD mode is not used to decode the block, obtain a HoG value for the block, wherein the block is associated with a current block;

   determine whether the HoG value is above a threshold value; and

   based on a determination that the HoG value is above the threshold value, enable the intra BIF.

9. The apparatus of claim 3, where the processor is configured to:

   based on the determination that the DIMD mode is not used to encode the block, obtain a HoG value for the block, wherein the block is associated with a current block;

   determine whether the HoG value is above a threshold value; and

   based on a determination that the HoG value is above the threshold value, enable the intra BIF

10. The method of claim 2, wherein where the method comprises:

based on the determination that the DIMD mode is not used to decode the block, obtaining a HoG value for the block, wherein the block is associated with a current block;
determining whether the HoG value is above a threshold value; and
based on a determination that the HoG value is above the threshold value, enabling the intra BIF.

11. The method of claim 4, wherein where the method comprises:

based on the determination that the DIMD mode is not used to encode the block, obtaining a HoG value for the block, wherein the block is associated with a current block;
determining whether the HoG value is above a threshold value; and
based on a determination that the HoG value is above the threshold value, enabling the intra BIF.

12. The apparatus of any one of claims 1, 5, 7, or 8, wherein the processor is configured to:

obtain a filter enabled indication, wherein the filter enabled indication is configured to indicate whether a sample associated with at least one of an intra block copy (IBC) mode or an intra template matching (intra TMP) mode has been filtered; and
based on the obtained filter enabled indication, determine that the sample associated with at least the IBC mode or the intra TMP mode has not been filtered; based on the determination, enable the intra BIF.

13. The method of any one of claims 2, 6, 7, or 10, wherein the method comprises:

obtaining a filter enabled indication, wherein the filter enabled indication is configured to indicate whether a sample associated with at least one of an intra block copy (IBC) mode or an intra TMP mode has been filtered;
based on the obtained filter enabled indication, determining that the sample associated with at least the IBC mode or the intra TMP mode has not been filtered; and
based on the determination, enabling the intra BIF.

14. The apparatus of any one of claims 3, 5, 7, or 9, wherein the processor is configured to:

determine that a sample that is associated with at least one of an intra block copy (BC) mode or an intra TMP mode has been filtered;
based on the determination that the sample associated with at least the IBC mode or the intra TMP mode has not been filtered, enable the intra BIF; and
include a filter enabled indication in video data, wherein filter enabled indication is configured to indicate whether the sample associated with at least one of the IBC mode or the intra TMP mode has been enabled.

15. The method of any one of claims 4, 6, 7, or 10, wherein the processor is configured to:

determining that a sample that is associated with at least one of an intra block copy (IBC) mode or an intra TMP mode has been filtered;
based on the determination that the sample associated with at least the IBC mode or the intra TMP mode has not been filtered, enabling the intra BIF; and
including a filter enabled indication in video data, wherein filter enabled indication is configured to indicate whether the sample associated with at least one of the IBC mode or the intra TMP mode has been enabled.

**FIG. 1**

FIG. 2

CODED VIDEO
BITSTREAM → **ENTROPY DECODER** (330) → **IMAGE PARTITIONER** (335) → **INVERSE QUANTIZER** (340) → **INVERSE TRANSFORMER** (350)

RECONSTRUCTED RESIDUAL BLOCKS

**PREDICTION ENHANCER** (390) — PREDICTION BLOCKS → (355) ⊕

RECONSTRUCTED BLOCKS

(370)

**INTRA PREDICTOR** (360)

**MOTION COMPENSATOR** (375)

**IN-LOOP FILTERS** (365) → RECONSTRUCTED VIDEO

**REFERENCE PICTURE BUFFER** (380)

300

# FIG. 3

8x8 TU

Plus sign shaped filter aperture

# FIG. 4

Coefficient
Look-up-table

Bilateral
Filtering

Plus sign shaped filter
aperture

Output Pixel

**FIG. 5**

**FIG. 6**

$P_{2,-4}$   $P_{2,-3}$   $P_{2,-2}$

$P_{0,-4}$   $P_{0,-3}$   $P_{0,-2}$

$P_{2,-1}$   $P_{2,0}$   $P_{2,1}$

$P_{0,-1}$   $P_{0,0}$   $P_{0,-1}$

$P_{2,2}$   $P_{2,3}$   $P_{2,4}$

$P_{0,2}$   $P_{0,3}$   $P_{0,4}$

Window associated with the sample $P_{0,0}$

Window associated with the sample $P_{2,0}$

**FIG. 7**

EP 4 730 784 A1

|  | $I_A$ |  |
|---|---|---|
| $I_L$ | $I_C$ | $I_R$ |
|  | $I_B$ |  |

**FIG. 8**

Samples from deblocking

**FIG. 9**

EP 4 730 784 A1

| | | $I_{AA}$ | | |
|---|---|---|---|---|
| | $I_{NW}$ | $I_{A}$ | $I_{NE}$ | |
| $I_{LL}$ | $I_{L}$ | $I_{C}$ | $I_{R}$ | $I_{RR}$ |
| | $I_{SW}$ | $I_{B}$ | $I_{SE}$ | |
| | | $I_{BB}$ | | |

**FIG. 10**

Chroma Samples from deblocking

```
    BIF CHROMA          SAO
```

+

Add and Clip

Output chroma Samples

# FIG. 11

FIG. 12

**FIG. 13**

**FIG. 14**

| | Europäisches Patentamt |
|---|---|
| | European Patent Office |
| | Office européen des brevets |

# EUROPEAN SEARCH REPORT

**Application Number**

EP 24 30 6736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/ documents/34_Rennes/wg11/JVET-AH2025-v1.zi p JVET-AH2025-v1.docx [retrieved on 2024-06-26] | 3,4, 12-15 | INV. H04N19/117 H04N19/82 H04N19/11 H04N19/159 H04N19/176 H04N19/593 H04N19/70 |
| A | * section 3.1.5 * * section 3.1.7 * * sections 3.2.22-3.2.26, 3.2.33-3.2.34 * * section 3.5 * ----- | 1,2,5-11 | |
| A | STRÖM (ERICSSON) J ET AL: "EE2: Bilateral filter in VTM, EE2 and VVenC", 22. JVET MEETING; 20210420 - 20210428; TELECONFERENCE; (THE JOINT VIDEO EXPLORATION TEAM OF ISO/IEC JTC1/SC29/WG11 AND ITU-T SG.16 ), , no. JVET-V0094 ; m56506 22 April 2021 (2021-04-22), XP030294207, Retrieved from the Internet: URL:https://jvet-experts.org/doc_end_user/ documents/22_Teleconference/wg11/JVET-V009 4-v4.zip JVET-V0094_v4/JVET-V0094_v4_clean.docx [retrieved on 2021-04-22] * the whole document * ----- | 1-15 | **TECHNICAL FIELDS SEARCHED (IPC)** H04N |

The present search report has been drawn up for all claims

| Place of search | Date of completion of the search | Examiner |
|---|---|---|
| The Hague | 6 March 2025 | Wedi, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)